# EUROPEAN PATENT SPECIFICATION

(11) **EP 1 505 801 B1**
(45) Date of publication and mention of the grant of the patent: **04.03.2009**
(21) Application number: 04254718.2
(22) Date of filing: 05.08.2004
(51) Int. Cl.: H04M 1/04, H02J 7/00

(54) **Holster for supporting and charging a wireless peripheral of a mobile device**
Halter für das Tragen und Laden einer drahtlosen Randeinrichtung eines Mobilgeräts
Etui de support et chargement d'un périphérique sans fil d'un dispositif mobile

(30) Priority: 05.08.2003 GB 0318357; 27.02.2004 CA 2459192; 27.02.2004 US 787173
(43) Date of publication of application: 09.02.2005
(73) Proprietor: Research In Motion Limited, Waterloo, Ontario N2L 3W8 (CA)
(72) Inventor: Lowles, Robert J., Waterloo, Ontario, N2T 2J5 (CA)
(74) Representative: Hibbert, Juliet Jane Grace

(56) References cited:
- EP-A- 1 326 410
- US-A- 5 610 979
- US-A- 5 926 006

## Description

### FIELD OF THE INVENTION

The present invention generally relates to holsters for mobile devices and their peripherals. More particularly, the present invention relates to a structure for supporting peripherals to allow them to be charged by the mobile device.

### BACKGROUND OF THE INVENTION

Peripheral devices are increasingly used in conjunction with mobile electronic devices. Wireless headsets, for example, add functionality to cellular phones. Additionally, an increasing number of portable digital cameras are designed to interact with cellular phones and personal digital assistants.

It is well known that peripheral devices are subject to the competing requirements of power and size. There is an increasing demand for peripheral devices having a long-lasting power supply. Additionally, there is a desire to minimise peripheral size, which results in smaller batteries. Peripherals often use a lithium ion or a nickel metal hydride batteries as their power supply to provide long life, low weight, and rechargeability. Charging the batteries of a peripheral device often involves docking the batteries, possibly within the peripheral, in a charger connected to a power source such as an electrical outlet or a motor vehicle battery. Consequently, a user's enjoyment of a peripheral is limited by having to be at home, in the office, or in the car to charge the peripheral. This also results in the user having to manage the charging of two separate devices, the main unit and the peripheral device.

Peripherals and mobile devices are typically carried in carrying cases rather than holsters. Carrying cases have several pockets whereas holsters typically have a sleeve. Although the smaller size of holsters makes them desirable for holding peripherals, holsters are normally designed to hold only one item at a time, either a mobile device or a peripheral. Carrying cases hold peripherals in pockets which are closed using a fastener such as a zipper or hook and loop fastener such as those made by Velcro^{™}. Retrieving the peripheral entails fiddling with the fastener of a carrying case, which is cumbersome.

### SUMMARY OF THE INVENTION

The invention is set out in the independent claims. Preferred features are set out in the dependent claims.

According to an aspect of the invention, a system for mobile communications comprises a mobile device, a holster for receiving and retaining the mobile device in a sleeve and a peripheral device comprising a mating structure for releasably retaining the peripheral device in direct electrical contact with the mobile device retained in the sleeve so as to permit the mobile device to charge a battery in the peripheral device through a charging contact.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1A illustrates a side view of the holster according to an embodiment of the present invention;
Figure 1B illustrates a front view of the holster of Figure 1A;
Figure 1C illustrates a top view of the holster of Figure 1A;
Figure 2A illustrates a side view of the holster and a mobile device according to an embodiment of the present invention;
Figure 2B illustrates a front view of the holster and device of Figure 2A;
Figure 3A illustrates a side view of the holster retaining the mobile device according to an embodiment of the present invention;
Figure 3B illustrates a front view of the holster and device of Figure 3A;
Figure 4A illustrates a side view the peripheral device with a holster retaining the mobile device according to an embodiment of the present invention;
Figure 4B illustrates a front view of the peripheral device in Figure 4A;
Figure 4C illustrates a top view of the peripheral device in Figure 4A;
Figure 5A illustrates a side view of the holster retaining the mobile device and peripheral device according to the first embodiment of the present invention;
Figure 5B illustrates a top view of the holster and peripheral device of Figure 5A;
Figure 6A illustrates a side view of a holster according to an embodiment of the present invention;
Figure 6B illustrates a front view of the holster of Figure 6A;
Figure 7 illustrates a side view of a mobile device and a holster of an embodiment of the present invention;
Figure 8 illustrates a side view of the holster retaining the mobile device according to an embodiment of the present invention;
Figure 9A illustrates a side view of a mobile device held by a holster and aligned to receive peripheral device;
Figure 9B illustrates a front view of the mobile device, holster and peripheral device of Figure 9A;
Figure 10 illustrates a side view of the holster retaining a mobile device and the peripheral device with its arm rolled out according to an embodiment of the present invention; and
Figure 11 illustrates a side view of the holster retaining a mobile device and a peripheral device according to an embodiment of the present inventions.

### DETAILED DESCRIPTION

Generally, a holster for holding both a peripheral device and a mobile device is provided. More specifically, the holster holds both a mobile device and a peripheral device to permit the mobile device to charge the peripheral device.

Typically, users of peripheral devices such as wireless headsets or digital cameras that interface with a mobile device must carry a mobile charging station with them. This results in a net increase in the number of items a user is required to carry. Systems in accordance with aspects of the present invention negates the need to carry a mobile charging station by providing a holster to hold both the mobile device and the peripheral device, so that they are in electrical contact with each other, allowing the peripheral device to recharge its battery from the mobile device. Due to size related issues, peripheral devices typically have smaller batteries than mobile devices, and shorter battery lives. By allowing a peripheral device to be charged by a mobile device while both devices are idling, the peripheral device is given an effectively longer battery life. In a presently preferred embodiment, the holster supports the peripheral device in such a way that when the peripheral is held for charging, the mobile device can be removed for use while the peripheral device remains securely retained by the holster.

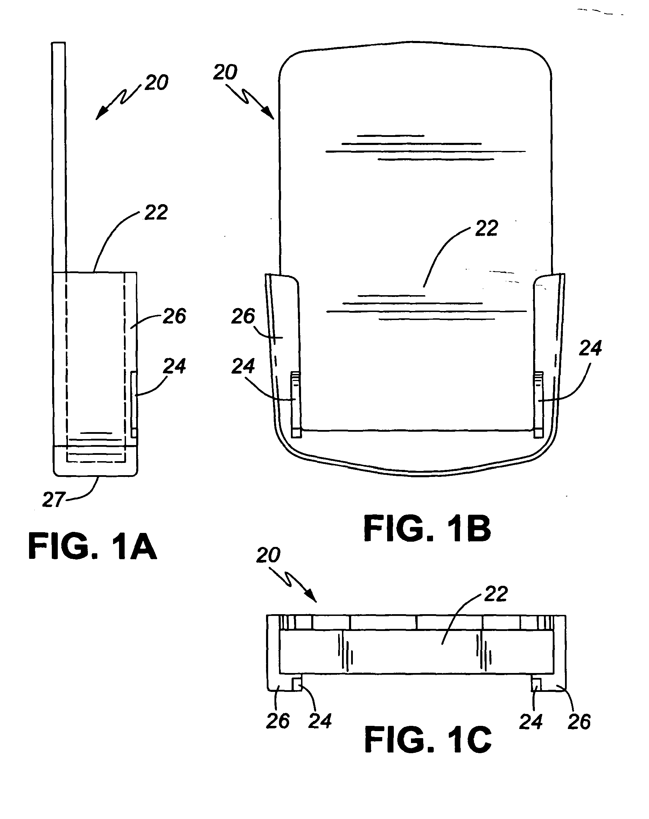

Figure 1A shows a side view of a holster according to an embodiment of the present invention. Holster **20** has a back panel, a base portion **27**, and side wall portions **26** which define sleeve **22** designed for receiving a mobile device. Also illustrated in Figure 1A is a mating structure **24** in side wall **26** to allow a peripheral device to mate with a holster. One skilled in the art will readily appreciate that there are a number of implementations for such a mating device. These may include grooves with bosses or flanges to retain a mobile device after it is slid into place, magnets, or other physical means of engaging a peripheral device. Figure 1B shows a front view of the holster illustrated in Figure 1A. Holster **20** has two side walls **26** each having its own mating structure **24**, the side walls **26** helping to define the sleeve **22.** Figure 1C illustrates the top view of the holster of the Figures 1A and 1B. As can be seen from Figure 1C, holster **20** has a sleeve **22** defined by side walls **26.** Each side wall **26** has a mating structure **24**. Examples of mating structures include retaining brackets, magnets, tabs, latches, flanges, hooks, clamps, and tongue-and-groove assemblies. Additionally, one skilled in the art will appreciate that in place of mating structure **24** there can be offered a peripheral sleeve adjacent to the sleeve **22** for holding the mobile device.

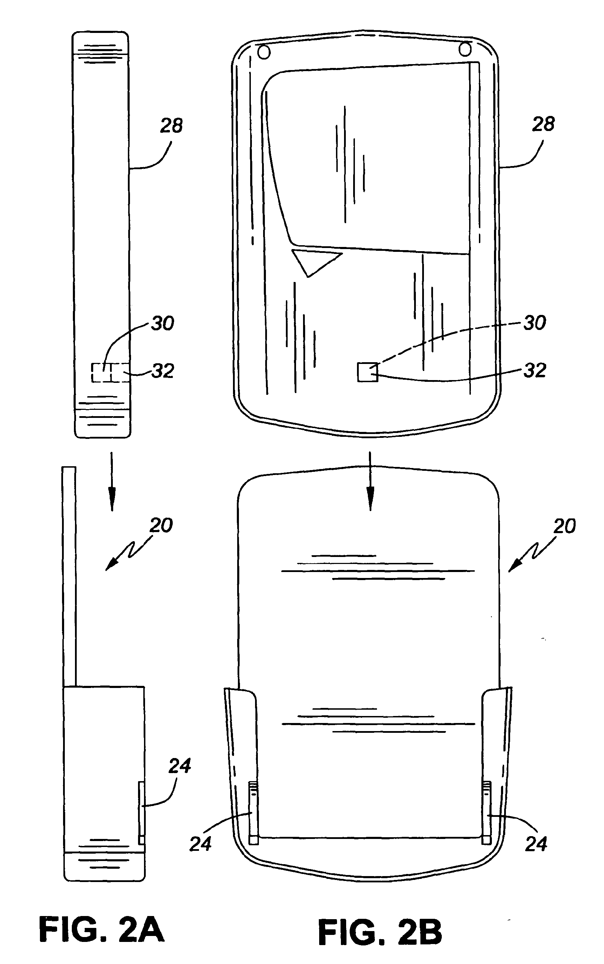

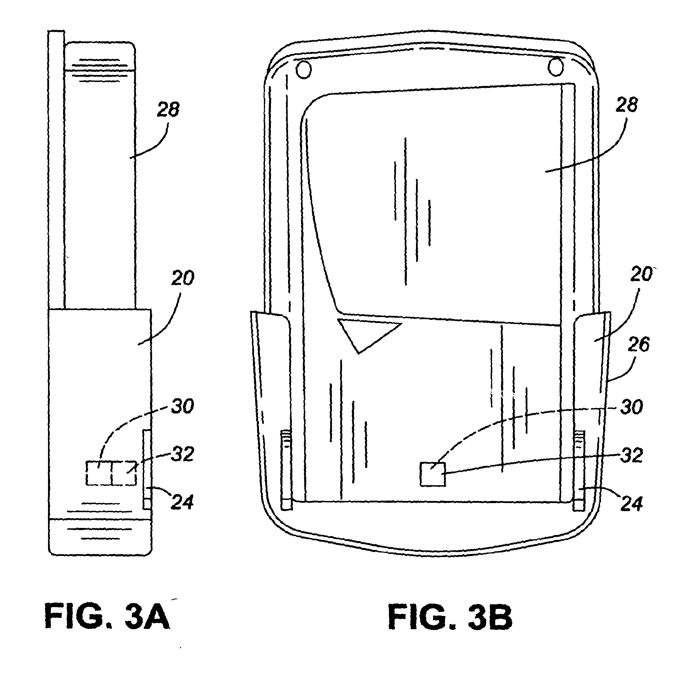

Figure 2A illustrates a side view of the holster of Figure 1, and a mobile device **28** for being retained in the sleeve. Mobile device **28** has a charger **30** connected to a charging port **32**. Figure 2B illustrates the mobile device **28** and holster **20** from a front view. Figures 3A and 3B provide side and front views respectively of mobile device **28** contained in the sleeve of holster **20**. As can be seen from Figures 3A and 3B, the sleeve retains mobile device **28** so that charger **30**, and charging port **32** are accessible from the front opening of the holster defined by the side walls **26**. Additionally, mating structure **24** is aligned so that a peripheral device will be held on holster **20** so that it has access to both charging port **32** and charger **30**.

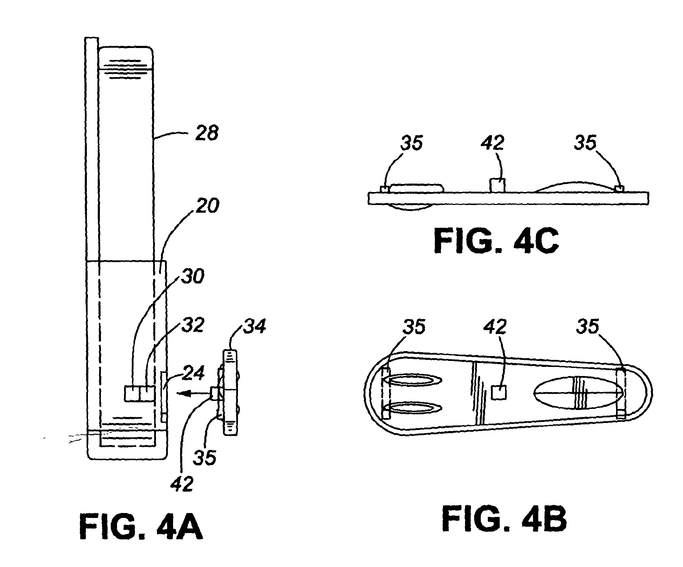

Figure 4A illustrates a side view of a peripheral device **34** and holster **20** retaining mobile device **28**. Peripheral device **34** has two mating structure **35** and a charging contact **42**. As shown in Figures 4B and 4C, mating structure **35** and charging contact **42** are accessible from the front of peripheral device **34**. Mating structures **35** and **24** are located so that they can connect. Charging contact **42** is positioned such that connecting mating structures **35** and **24** brings charging contact **42** in electrical contact with charging port **32**.

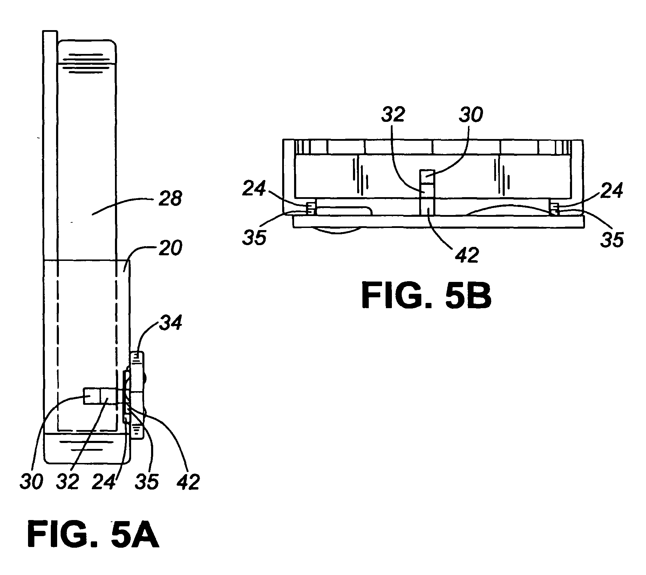

Figures 5A and 5B provide side and top views of peripheral device **34** mated with holster **20** and held in electrical contact with mobile device **28**. Holster **20** holds mobile device **28** in its sleeve as previously described. Peripheral device **34** uses its mating structures **35** to mate with mating structure **24** on holster **20**. Upon connection of mating structure **24** with mating structure **35**, charging contact **42** of peripheral device **34** is placed in electrical contact with charging port **32**. This allows a direct electrical contact between peripheral device **34** and mobile device **28**. Mobile device **28** using charger **30** and charging port **32**, which in various embodiments may be integrated into a single element, provides an electrical current to peripheral device **34** through charging contact **42**. This current is used to charge the battery of peripheral device **34**. One skilled in the art will readily appreciate that there are a plurality of designs for a charging unit to allow one battery-powered device to charge another. As a result, charger **30** of the mobile device **28** is able to charge peripheral device **34**, while peripheral device **34** is connected to holster **20**.

In one presently preferred embodiment, peripheral device **34** is a wireless headset for use with a mobile device providing voice services. Thus, a headset for use with a mobile device such as a cellular phone can be recharged by the mobile device, instead of requiring either a dedicated charger, or a desktop or vehicle charger. This allows the design of peripheral device **34** to minimize the volume and weight of a battery, while still providing an effectively long battery life. In another embodiment peripheral device **34** is a camera, and it benefits from the same advantage previously described.

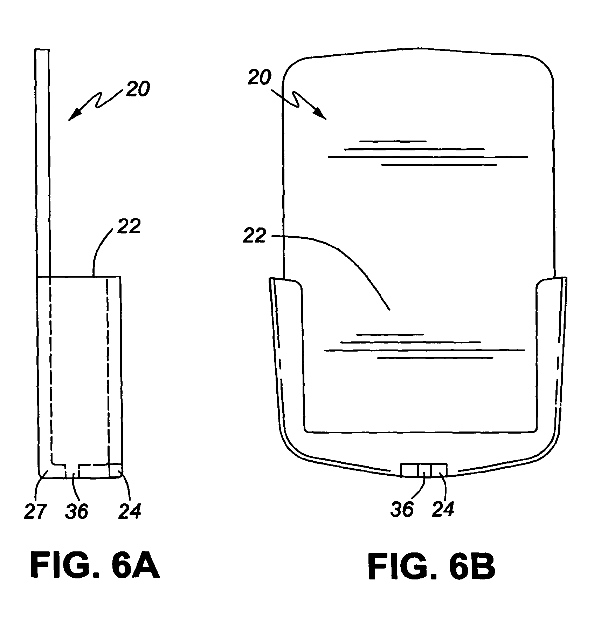

Figure 6A illustrates a second embodiment of the present invention. There are cases where it is preferable that the peripheral device charges off the mobile device through the base of the holster. For example, holsters designed to retain a mobile device under rigorous movement include a supporting wall between side walls and located opposite the back panel. Unfortunately, the supporting wall prevents a peripheral device from making electrical contact with a mobile device. One of skill in the art will appreciate that holster designs may arise where it is preferable that charging occurs through the base of the holster.

Figure 6A shows a side view of a holster of the second embodiment of the present invention. Holster **20** has a back panel, side walls, and a base **27**. The side walls, back panel and base **27** define sleeve **22** for retaining a mobile device. Base **27** also includes a mating structure **24** for securing to a peripheral device. Base **27** of holster **20** has an aperture **36** to allow a peripheral device to make electrical contact directly with the mobile device held by sleeve **22**. Figure 6B provides a front view of the holster illustrated in Figure 6A. Holster **20** has a back panel, a sleeve **22** defined by the back panel, side walls, and base **27**. In base **27** is a mating structure **24** for securing a peripheral device, and an aperture **36** to allow the peripheral device secured by mating structure **24** to make electrical contact with the mobile device held by sleeve **22**.

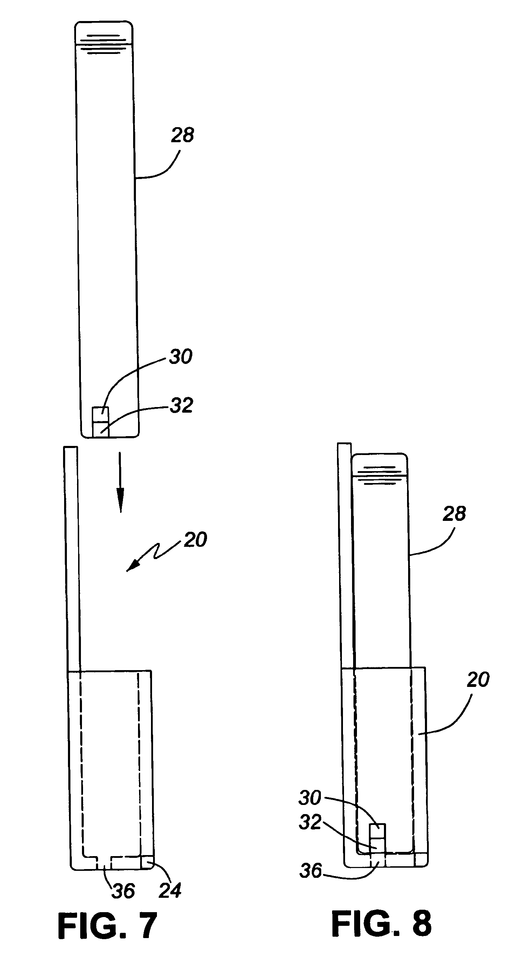

Figure 7 illustrates the holster illustrated in Figures 6A and 6B aligned to receive a mobile device **28**. Mobile device **28** has charger **30** and charging port **32** located at its base to align with aperture **36**.

Figure **8** illustrates mobile device **28** held in the sleeve of holster **20** with charging port **32** and charger **30** aligned with aperture **36.**

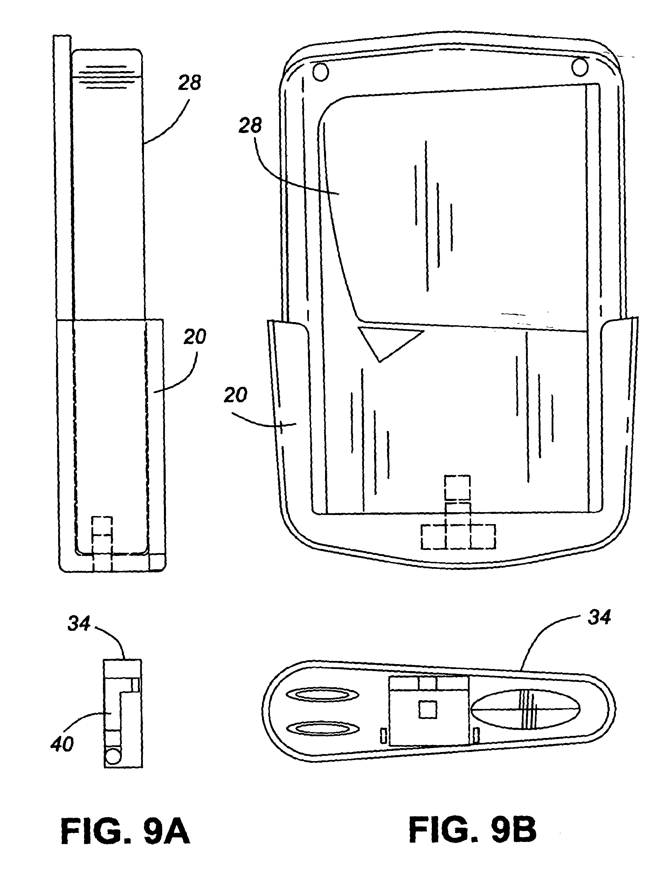

Figure 9A illustrates a side view of peripheral device **34** having a retractable, or hideable arm **40.** Arm **40** can be retracted, or in the presently illustrated embodiment rotated into the body of peripheral device **34** so that while in use it is not exposed. Figure 9B illustrates a front view of peripheral device **34,** and mobile device **28** held in the sleeve of holster **20.** One skilled in the art will appreciate that the charging port and charger of the mobile device **28** are aligned with the aperture in the base of holster **20.**

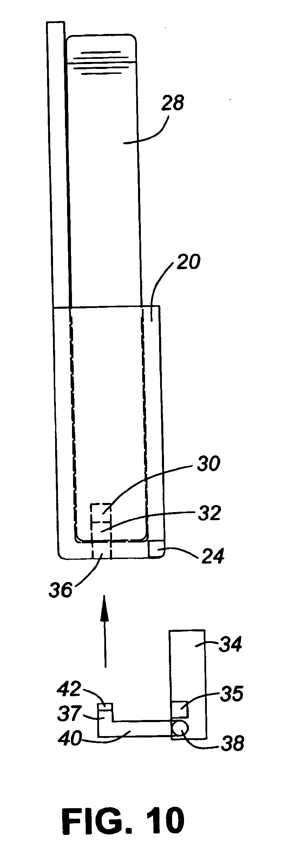

Figure 10 illustrates a side view of the holster **20** holding mobile device **28** in its sleeve such that charger **30** and charging port **32** are in alignment with aperture **36,** and holster **20** is aligned with peripheral device **34** to allow peripheral device **34** to mate with the holster **20.** To mate with holster **20** peripheral device **34** engages mating structure **24** with its mating structure **35** to provide a physical connection between holster **20** and peripheral device **34.** Additionally, arm **40** is in an exposed position such that a tongue **37** can be inserted into aperture **36** so that a charging contact **42** of peripheral device **34** is aligned to make contact with electrical contact **32** of mobile device **28.**

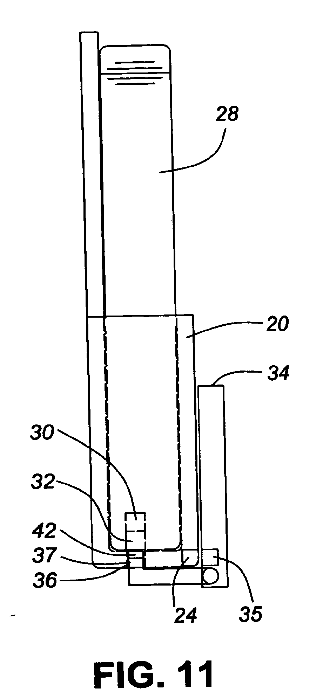

Figure 11 illustrates the engagement of peripheral device **34** with holster **20,** Mating structures **24** and **35** provide a secure fastening of peripheral device **34** to holster **20.** As described above, this attachment can be made using a number of known fasteners, including magnetic fastening. Charging contact **42** is in electrical contact with charging port **32** of mobile device **28** such that charger **30** can provide an electrical current to peripheral device **34** to recharge the batteries of the peripheral device. As discussed above, this provides a longer effective battery life for the peripheral device, while allowing the peripheral device **34** to carry a small capacity battery.

Although not explicitly shown in the drawings, it will also be appreciated that a peripheral device and a mobile device incorporate one or more compatible communication interfaces. In one embodiment, the mobile device communicates with the peripheral device on a Bluetooth^{™} communication channel, enabled by Bluetooth modules in the mobile device and the peripheral device, "Bluetooth" refers to a set of specifications, available from the Institute of Electrical and Electronics Engineers (IEEE), relating to wireless personal area networks. Other types of communication interfaces, including Infrared Data Association (IrDA) ports or surface acoustic wave (SAW) technologies, for example, are also contemplated. Further, like the electrical connection between a mobile device and a peripheral device described above, a communication channel may be direct or indirect. For an indirect communication channel, the holster incorporates a holster-to-peripheral device interface compatible with an interface in the peripheral device and a holster-to-mobile device interface compatible with an interface in the mobile device. The interfaces between the holster and the peripheral device need not necessarily be the same as or compatible with the interfaces between the holster and the mobile device. Where these interfaces are not compatible, the holster further includes a communication controller or translator to enable communication between the incompatible holster-to-peripheral device and holster-to-mobile device interfaces.

Thus a holster for use with a mobile device and a peripheral device is disclosed herein. The holster provides a mating structure for holding a peripheral device so that a mobile device charges the peripheral device, The holster removes the inconvenience of having to charge a peripheral through a battery charger at work or home by permitting the peripheral to charge from the mobile device. The holster can be used with any mobile device and peripheral device, such as a cellular phone and a wireless headset.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A system for mobile communications, the system comprising a mobile device (28), a peripheral device (34) and a holster (20) for receiving and retaining the mobile device (28) in a sleeve (22), the holster (20) comprising:
a mating structure (24) for releasably retaining the peripheral device (34) so that a charging port (32) of the mobile device (28) retained in the sleeve (22) is in direct electrical contact with a charging contact (42) extending from the peripheral device (34) to allow the mobile device (28) to charge a battery in the peripheral device (34) through the charging contact (42), wherein the holster mating structure (24) connects with a peripheral device mating structure (35) for releasably retaining the peripheral device (34).

2. The system of claim 1, wherein the holster further includes a base for supporting the mobile device in the sleeve, the base having an aperture for receiving the charging contact and allowing it to make electrical contact with the charging port.

3. The system of claim 1 or claim 2, wherein the holster mating structure is selected from the group consisting of a retaining bracket, a magnet, a tab, a latch, a flange, a hook, a clamp, a friction fit, and a tongue and groove.

4. The system of any one of claims 1 - 3, wherein the mobile device is a cellular phone and the peripheral device is a wireless headset for interaction with the cellular phone.

5. The system of claim 4, wherein the mobile device communicates with the peripheral device on a Bluetooth communication channel.

6. The system of any one of claims 1 - 5, wherein the mobile device is a cellular phone and the peripheral device is a camera for interaction with the cellular phone.

## Patentansprüche

1. System für mobile Kommunikationen, wobei das System aufweist eine mobile Vorrichtung (28), eine Peripherievorrichtung (34) und ein Halter bzw. eine Aufnahmevorrichtung (holster) (20) zum Aufnehmen und Halten der mobilen Vorrichtung (28) in einer Hülse (sleeve) (22), wobei der Halter (20) aufweist:
eine Anschluss-Struktur (24) zum lösbaren Halten der Peripherievorrichtung (34), so dass ein Ladeanschluss (32) der mobilen Vorrichtung (28), die in der Hülse (22) gehalten wird, in direktem elektrischen Kontakt mit einem Ladekontakt (42) ist, der sich aus der Peripherievorrichtung (34) erstreckt, um der mobilen Vorrichtung (28) ein Laden einer Batterie in der Peripherievorrichtung (34) durch den Ladekontakt (42) zu ermöglichen, wobei die Anschluss-Struktur (24) des Halters mit einer Anschluss-Struktur (35) der Peripherievorrichtung verbunden ist zum lösbaren Halten der Peripherievorrichtung (34).

2. System gemäß Anspruch 1, wobei der Halter weiter eine Basis umfasst zum Unterstützen der mobilen Vorrichtung in der Hülse, wobei die Basis eine Öffnung hat zum Aufnehmen des Ladekontakts und um diesem zu ermöglichen, einen elektrischen Kontakt mit dem Ladeanschluss herzustellen.

3. System gemäß Anspruch 1 oder Anspruch 2, wobei die Anschluss-Struktur des Halters gewählt ist aus der Gruppe, die besteht aus einer Halteklammer, einem Magnet, einer Schlaufe (tab), einem Verschluss (latch), einem Flansch, einem Haken, einer Klampe, einer Friktionsform, und einer Nut- und Federverbindung.

4. System gemäß einem der Ansprüche 1 - 3, wobei die mobile Vorrichtung ein zellulares Telefon ist und die Peripherievorrichtung ein drahtloses Headset ist zur Interaktion mit dem zellularen Telefon.

5. System gemäß Anspruch 4, wobei die mobile Vorrichtung mit der Peripherievorrichtung auf einem Bluetooth-Kommunikationskanal kommuniziert.

6. System gemäß einem der Ansprüche 1 - 5, wobei die mobile Vorrichtung ein zellulares Telefon ist und die Peripherievorrichtung eine Kamera ist zur Interaktion mit dem zellularen Telefon.

## Revendications

1. Système pour communications mobiles, le système comportant un dispositif mobile (28), un dispositif périphérique (34) et un étui (20) destiné à recevoir et retenir le dispositif mobile (28) dans un fourreau (22), l'étui (20) comportant :
une structure d'accouplement (24) destinée à retenir de façon libérable le dispositif périphérique (34) afin qu'un port de charge (32) du dispositif mobile (28) retenu dans le fourreau (22) soit en contact électrique direct avec un contact de charge (42) faisant saillie du dispositif périphérique (34) pour permettre au dispositif mobile (28) de charger une batterie située dans le dispositif périphérique (34) en passant par le contact de charge (42), dans lequel la structure d'accouplement (24) de l'étui se connecte à une structure d'accouplement (35) du dispositif périphérique pour retenir de façon libérable le dispositif périphérique (34).

2. Système selon la revendication 1, dans lequel l'étui comprend en outre une base destinée à supporter le dispositif mobile dans le fourreau, la base ayant une ouverture destinée à recevoir le contact de charge et lui permettant d'établir un contact électrique avec le port de charge.

3. Système selon la revendication 1 ou la revendication 2, dans lequel la structure d'accouplement de l'étui est choisie dans le groupe constitué d'une patte de retenue, d'un aimant, d'une languette, d'un verrou, d'un rebord, d'un crochet, d'une bride, d'un ajustement à frottement, et d'un embrèvement.

4. Système selon l'une quelconque des revendications 1 à 3, dans lequel le dispositif mobile est un téléphone cellulaire et le dispositif périphérique est un casque d'écoute sans fil destiné à interagir avec le téléphone cellulaire.

5. Système selon la revendication 4, dans lequel le dispositif mobile communique avec le dispositif périphérique par un canal de communication Bluetooth.

6. Système selon l'une quelconque des revendications 1 à 5, dans lequel le dispositif mobile est un téléphone cellulaire et le dispositif périphérique est un appareil de prise de vues destiné à interagir avec le téléphone cellulaire.
